# EUROPÄISCHE PATENTSCHRIFT

(11) **EP 2 078 900 B1**
(45) Veröffentlichungstag und Bekanntmachung des Hinweises auf die Patenterteilung: **04.04.2012**
(21) Anmeldenummer: 08022519.6
(22) Anmeldetag: 29.12.2008
(51) Int. Cl.: F24D 3/16

(54) **Deckenaufbau**
Roof construction
Montage plafonnier

(30) Priorität: 10.01.2008 AT 402008
(43) Veröffentlichungstag der Anmeldung: 15.07.2009
(73) Patentinhaber: Rettig ICC B.V., 6199 AA Maastricht-Airport (NL)
(72) Erfinder: Oberle, Günter Werner, 77749 Hohberg (DE)
(74) Vertreter: Wildhack & Jellinek

(56) Entgegenhaltungen:
- EP-A1- 2 180 108
- DE-A1- 4 137 753
- DE-U1- 20 011 751

## Beschreibung

Die Erfindung betrifft einen Deckenaufbau bzw. eine Deckenwärmetauscheranordnung mit Heiz-Kühlpaneelen gemäß dem Oberbegriff des Patentanspruches 1.

Aus der DE 20011751 U1 ist eine Deckenwärmertauscheranordnung mit Heiz-Kühlpaneelen bekannt, wobei die Deckenwärmertauschanordnung zwei Träger umfasst, die an der zu bestückenden Decke befestigbar sind, von denen die Paneele nebeneinander liegend abgehängt sind, die Fluidanschlüsse der einzelnen Paneele auf ein und derselben Fläche der jeweiligen Paneele ausgebildet sind, die Paneele mit dieser Fläche einem der sie abstützenden Träger zugewandt angeordnet sind und die Verbindung der Anschlüsse der einzelnen Paneele untereinander und/oder mit bauseits vorgegebenen Fluidanschlüssen von Arbeitsfluidleitungen in einem Raum ausgeführt ist.

Die Erfindung hat die Aufgabe einen derartigen Deckenaufbau bzw. eine Deckenwärmetauscheranordnung aus konstruktiv einfach aufgebauten und wirtschaftlich gestehbaren Einzelteilen aufzubauen, deren Montage rasch erfolgen kann; die Auswechselbarkeit von defekten Elementen soll problemlos vor sich gehen. Diese Ziele werden bei einer Anordnung der eingangs genannten Art erfindungsgemäß dadurch erreicht, dass der Deckenaufbau bzw. die Deckenwärmertauscheranordnung zumindest zwei Träger umfasst, die an der zu bestückenden Decke befestigbar sind, von denen die Paneele nebeneinander liegend abgehängt sind, dass die Fluidanschlüsse der einzelnen Paneele auf ein und derselben Seitenfläche der jeweiligen Paneele ausgebildet sind, dass die Paneele mit dieser Seitenfläche einem der sie abstützenden Träger zugewandt angeordnet sind, dass die Paneele mit ihrer die Anschlüsse aufweisenden Seitenfläche einen Zwischenraum unterhalb des Trägers, von dem sie abgehängt sind, begrenzen, und die Anschlüsse in diesen Zwischenraum einmünden und dass die Verbindung der Anschlüsse der einzelnen Paneele untereinander und/oder mit bauseits vorgegebenen Fluidanschlüssen von Arbeitsfluidleitungen in diesem unterhalb, vorzugsweise innerhalb, des jeweiligen Trägers gelegenen Zwischenraum ausgeführt ist.

Die erfindungsgemäße Anordnung bietet die Vorteile, dass ein Deckenaufbau erreicht wird, ohne dass eine spezielle Maßanfertigung von Paneelen vorgenommen werden muss, um eine Decke vollständig bzw. nahezu vollständig zu verbleiben. Mit vorhandenen Paneelen mit, insbesondere denselben, vorgegebenen Abmessungen können Zwischendecken hergestellt werden, ebenso Rohdecken verkleidende und an Decken installierte Wärmetauscheranordnungen. Der erfindungsgemäße Deckenaufbau wird montiert, indem vorab die Träger und sodann die Paneele montiert werden; danach sind sämtliche Anschlüsse zugänglich und sodann können Dichtigkeitstests am fertigen Deckenaufbau erfolgen. Anschließend kann der Deckenaufbau tapeziert oder mit einer Verkleidung versehen werden.

Der erfindungsgemäße Deckenaufbau besitzt eine geringe Höhe und die Herstellung der nötigen Verrohrungen bzw. Anschlussverbindungen ist einfach möglich. Das erfindungsgemäße System benötigt nur eine geringe Anzahl von untereinander gleichen Bauteilen, sodass der Aufwand für die Lagerhaltung minimiert wird.

Die Unteransprüche betreffen vorteilhafte Ausführungsformen der Erfindung. Konstruktiv einfach ist ein erfindungsgemäßer Deckenaufbau, wenn alle zwischen zwei Trägern angeordneten Paneele mit ihrer die Anschlüsse aufweisenden Seitenfläche demselben Träger zugewandt angeordnet sind und/oder wenn die, vorzugsweise einstückigen, Träger im Querschnitt U-Form besitzen und mit der Basis des U zur Decke weisend angeordnet bzw. befestigt sind. Vorteile bei der Verlegung ergeben sich, wenn die Träger zumindest abschnittsweise, insbesondere an ihren Schenkelenden, Verbindungselemente, z.B. seitlich in Richtung auf die Basisebene der U-Form geneigt abgehende Abbiegungen bzw. Einhängevorsprünge, aufweisen, und wenn jedes Paneel an die Verbindungselemente der Träger angepasste Verbindungselemente aufweist, z.B. an der die Anschlüsse tragenden Seitenfläche und an den dieser Seitenfläche gegenüberliegenden Seitenfläche an die Einhängevorsprünge bzw. Abbiegungen angepasste Einhängenasen bzw. Abbiegungen und/oder wenn der Zwischenraum mit einem am Träger oder an den Paneelen befestigten Abdeckprofil abgedeckt ist, wobei gegebenenfalls das Abdeckprofil einen U-förmigen Querschnitt besitzt und die Schenkel des U dem Träger zugewendet sind bzw. wenn die Paneele eine rechteckförmige Grundfläche besitzen, und mit ihrer kürzeren Seite an dem jeweiligen Träger befestigt bzw. eingehängt sind und/oder wenn die Grundfläche der Paneele und die Basis des U-förmigen Abdeckprofils in derselben Ebene liegen bzw. eine im wesentlichen ebene Fläche ausbilden.

Im folgenden wird die Erfindung anhand der Zeichnungen beispielsweise näher erläutert. Es zeigen Fig. 1 schematisch eine Ansicht eines Deckenaufbaus von oben, d.h. von der Decke her gesehen. Fig. 2 zeigt einen schematischen Schnitt quer zu einem Träger. Fig. 3 zeigt eine Untersicht eines teilweise installierten Deckenaufbaus. Fig. 4 zeigt eine Detailansicht eines Deckenaufbaus. Fig. 5 zeigt eine Ansicht einer Heiz-, Kühl-Paneels. Fig. 6 zeigt einen Schnitt durch einen Deckenaufbau.

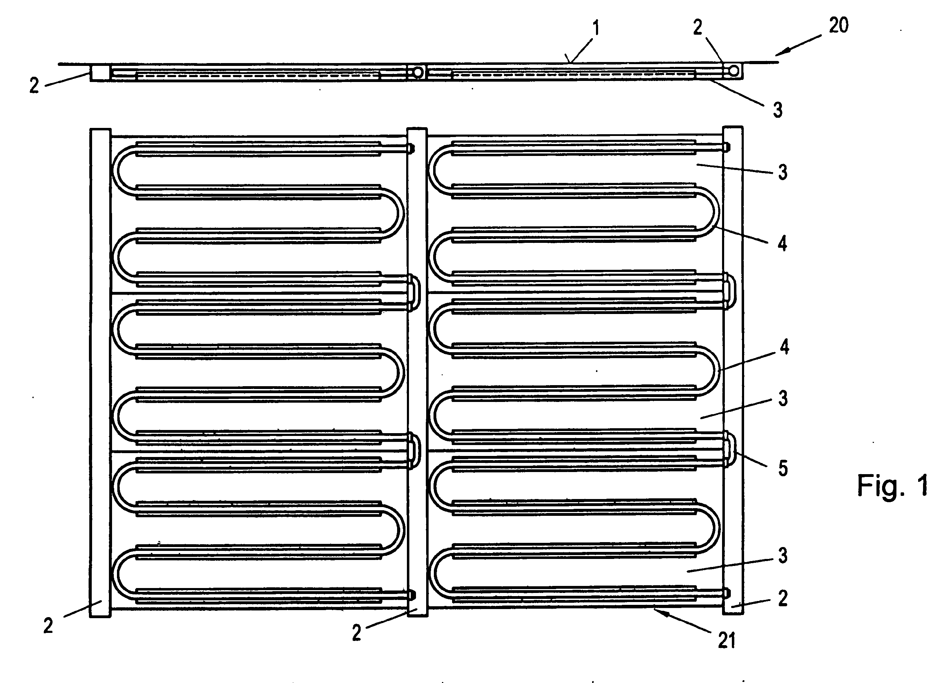

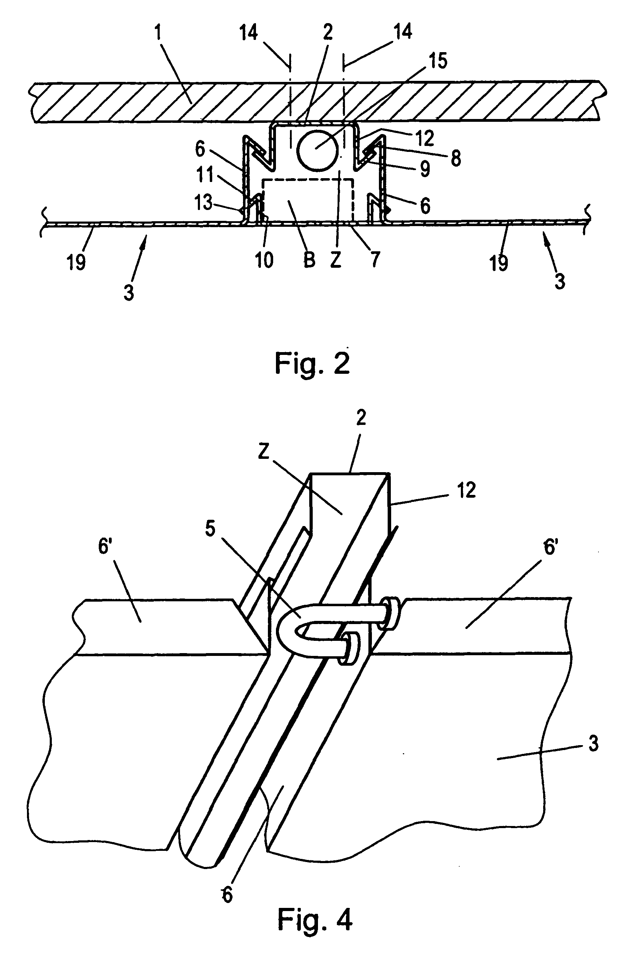

Fig. 1 zeigt eine Raumbegrenzung 20 innerhalb der an der Decke dieses Raumes ein erfindungsgemäßer Deckenaufbau 21 befestigt ist. Dieser Deckenaufbau 21 ist lediglich teilweise bzw. in reduziertem Umfang dargestellt und umfasst Träger 2, zwischen denen Heiz-Kühl-Paneele 3 angeordnet sind. Jedes dieser Heiz-Kühl-Paneele 3 umfasst eine Fluidleitung 4, die mittels Anschlüssen 18 an entsprechende in Fig. 2 und 4 dargestellte, innerhalb eines von den Trägern 2 begrenzten Zwischenraumes Z verlaufende, zu weiteren Paneelen 3 führende Verbindungsleitungen 5 oder bauseitige Fluidleitungen 15 angeschlossen ist. Oberhalb der in Fig. 1 dargestellten Draufsicht auf den Deckenaufbau 21 ist ein schematischer Schnitt durch diesen dargestellt und man erkennt die von der Decke 1 abgehängten Träger 2 bzw. die von den Trägern 2 getragenen Paneele 3.

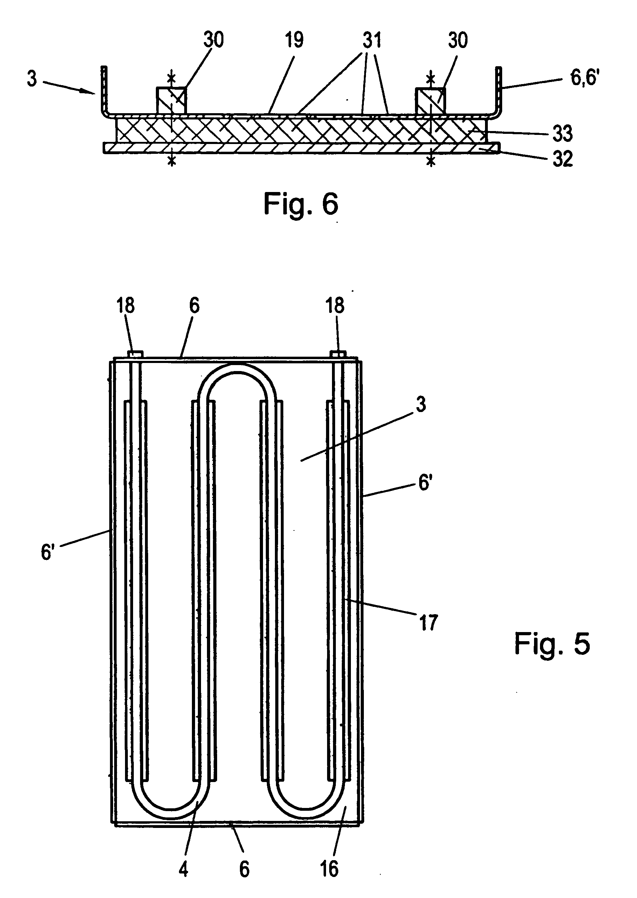

Wie insbesondere aus Fig. 1 und 2 hervorgeht, sind an der mit Paneelen 3 zu bestückenden Decke 1 oder an einer Unterkonstruktion zumindest zwei parallel verlaufende Träger 2 befestigt, an denen die Paneele 3 mit von einer Grundfläche 19 abgebogenen Seitenflächen 6 befestigt werden bzw. von denen die Paneele 3 nebeneinanderliegend abgehängt werden. Insbesondere sind die an den Trägern 2 nebeneinanderliegend angeordneten Paneele 3 mit ihren sich zwischen den Trägern 2 erstreckenden, in Fig. 4 und 5 erkennbaren Seitenflächen 6' aneinander anliegend angeordnet. Alle Seitenwandflächen 6, 6' weisen in Richtung zur Decke 1.

Es ist von Vorteil, wenn alle zwischen zwei Trägern 2 angeordneten Paneele 3 mit ihrer die Fluidanschlüsse 18 aufweisenden Seitenfläche 6 demselben Träger 2 zugewandt angeordnet sind, da damit die Montage bzw. der Anschluss an bauseitige Fluidleitungen 15 bzw. die Montage der Fluidverbindung 5 der einzelnen nebeneinander angeordneten Paneele 3 erleichtert wird. Aus diesem Grund sind auch die Anschlüsse 18 der einzelnen Paneele 3 auf ein und derselben Seitenfläche 6 der jeweiligen Paneele 3 ausgebildet, so wie dies aus Fig. 1 ersichtlich ist.

Jeder Träger 2 trennt somit die einander gegenüberliegend angeordneten Paneele 3 derart, dass die Paneele 3 auf einer Seite des Trägers 2 mit ihrer die Anschlüsse 18 aufweisenden Seitenfläche 6 und die Paneele auf der anderen Seite des Trägers 2 mit ihrer der Seitenfläche 6 mit den Anschlüssen 18 gegenüberliegenden Seitenfläche 6 einen Zwischenraum Z unterhalb des jeweiligen Trägers 2, von dem sie abgehängt sind, begrenzen, in welchen Zwischenraum Z die Anschlüsse 18 einmünden. Die Verbindung der Anschlüsse 18 der einzelnen Paneele 3 untereinander und/oder mit Fluidanschlüssen von bauseitig vorgegebenen Fluidleitungen 15 für Arbeitsfluid erfolgt unterhalb des jeweiligen Trägers 2 bzw. in dem von den Seitenflächen 6 der Paneele 3 und vom Träger 2 definierten Zwischenraum Z.

Es ist vorgesehen, dass die Paneele 3 von einer vorzugsweise rechteckigen Grundfläche 19, insbesondere im Winkel von 90°, abgebogene, insbesondere abgekantete, gegenüberliegende Seitenflächen 6 bzw. 6' besitzen. In dem von den Seitenflächen 6 bzw. 6' begrenzten Innenraum Z verläuft ein die beiden Anschlüsse 18 verbindendes Fluidrohr 4 zur Führung des Arbeitsfluids innerhalb des Paneels 3, insbesondere in Windungen.

Damit wird eine einfache Herstellung der Paneele 3 möglich. Die modulartig vorliegenden, untereinander gleiche Form und gleichen Aufbau aufweisenden Paneele 3 können in einfacher Weise zwischen zwei Träger 2 eingehängt bzw. eingebaut werden und danach immer mit derselben Vorgangsweise unter Zuhilfenahme gleich aufgebauter Verbindungsstücke 5 untereinander bzw. an die bauseitigen Fluidleitungen 15 angeschlossen werden.

Um diese Anschlussmöglichkeiten in einfacher Weise zu gewährleisten, ist vorgesehen, dass die beiden Anschlüsse 18 eines Paneels 3 dieselben Abstände zu den jeweiligen Rändern bzw. Kanten der sie aufweisenden Seitenfläche 6 besitzen und/ oder dass die Anschlüsse 18 aller Paneele 3 auf der jeweiligen, die Anschlüsse 18 aufweisenden Seitenfläche 6 gleiche Lage einnehmen.

Ein einfacher Aufbau ergibt sich, wenn vorgesehen ist, dass die, vorzugsweise einstückigen, Träger 2 im Querschnitt U-Form besitzen und mit der Basis des U zur Decke weisend befestigt sind. Prinzipiell könnte ein derartiger Träger 2 auch V-förmigen oder ähnlichen Aufbau besitzen bzw. ein oder mehrteilig ausgebildet sein.

Die Träger 2 weisen zumindest abschnittsweise, insbesondere an ihren Schenkelenden, Verbindungselemente 9 auf, z.B. seitlich in Richtung auf die Basisebene der U-Form abgehende Abbiegungen bzw. Einhängevorsprünge. Die Paneele 3 tragen an die Verbindungselemente 9 der Träger 2 angepasste Verbindungselemente 8, insbesonder an den die Anschlüsse 18 tragenden Seitenflächen 6 und den diesen Seitenflächen 6 gegenüberliegenden Seitenflächen 6 an die Einhängevorsprünge bzw. Abbiegungen angepasste Einhängenasen bzw. Abbiegungen.

Die Form und Art der Ausbildung der Verbindungselemente kann vielfältig gewählt werden. Von Vorteil ist es, wenn die Einhängevorsprünge in Richtung der Decke 1 von den Schenkelenden des U-förmigen Trägers 2 abgehen bzw. wenn von diesen Einhängevorsprüngen nach unten bzw. von der Decke 1 weggerichtete, an den Seitenflächen 6 der Paneele 3 durch Abbiegen hergestellte Einhängevorsprünge aufgenommen werden. Diese Verbindungselemente können sich durchgehend längs der Träger 2 bzw. der jeweiligen Seitenflächen 6 der Paneele 3 erstrecken oder auch nur über Teilbereiche derselben.

Ein stabiler und einfacher Aufbau der Paneele 3 ergibt sich, wenn das Fluidrohr 4 mit der Innenwandfläche der Grundfläche 19 der Paneele 3 verbunden ist oder an dieser anliegt bzw. an diese angepresst ist, z.B. mit an der Innenwandfläche befestigten, insbesondere angeklebten, Halteelementen 17. Es können z.B. Ω-förmige Haltelemente das Fluidrohr 4 umgeben, die mit ihren Endbereichen mit der Innenwandfläche der Grundfläche 19 verbunden, insbesondere verklebt, werden. An sich sollte vorgesehen sein, dass der Wärmeübergang zwischen dem Fluidrohr 4 und der Grundfläche 19 der Paneele 3 möglichst optimiert wird. Dazu können die Fluidrohre 4 mit Wärmeisolationsmaterial abgedeckt bzw. im Innenraum eines Paneels 3 oberhalb des Fluidrohres 4 eine Wärmedämmschicht angeordnet sein.

Wie aus Fig. 2 zu entnehmen ist, ist der Zwischenraum Z mit einem Abdeckprofil 7 abgedeckt. Die einzelnen Paneele 3 sind an ihrer die Anschlüsse 18 aufweisenden Seitenfläche 6 und auch an der dieser Seitenfläche 6 gegenüberliegenden Seitenfläche 6 mit Halteeinrichtungen 13, insbesondere Ausnehmungen bzw. Schlitzen, zur Befestigung eines Abdeckprofils 7 versehen, das den Zwischenraum Z zwischen bezüglich des Trägers 2 gegenüberliegend angeordneten Paneelen 3 überbrückt. Diese Halteeinrichtungen 13 wirken mit an dem Abdeckprofil 7 ausgebildeten, angepassten Halteeinrichtungen 11, insbesondere Einhänge- bzw. Rastnasen, zusammen.

Eine spezielle Ausführungsform eines Abdeckelementes, so wie dieses in Fig. 2 dargestellt ist, zeigt einen U-förmigen Querschnitt, wobei die Basis des U deckenfern angeordnet ist und das Abdeckelement 7 durch Einrasten bzw. Einhängen an den Seitenflächen 6 der Paneelen 3 befestigbar ist.

Die Anschlüsse 18 für das Arbeitsfluid der einzelnen Paneele 3 münden in den von Träger 2 begrenzten Zwischenraum Z ein und gehen vorzugsweise senkrecht von den Seitenwandflächen 6 der Paneele 3 ab. Damit werden lagemäßig definierte und gut zugängliche Anschlüsse 18 für die Paneele 3 zur Verfügung gestellt.

Um die Verlegung einfacher zu gestalten, ist es zweckmäßig, wenn die Paneele 3 eine rechteckförmige Grundfläche 19 besitzen und mit ihren kürzeren Seitenflächen 6 an den jeweiligen Trägern 2 befestigt bzw. eingehängt sind. Ferner sind die in den Trägern 2 nebeneinanderliegend angeordneten Paneele 3 mit ihren sich zwischen parallel verlegten Trägern 2 erstreckenden, abgebogenen Seitenwandflächen 6' aneinander anliegend angeordnet. Damit ergibt sich ein kompakter und für das Aufbringen von Tapete, Anstrich oder dgl. ebener bzw. flächiger Aufbau der Unterfläche der Wärmetauscheranordnung.

Zur Erstellung eines optisch ansehnlichen und gut verkleidbaren Deckenaufbaus 21 liegen die Grundflächen 19 der Paneele 3 und die Basis des U-förmigen Abdeckprofils 7 in derselben Ebene bzw. bilden eine im wesentlichen ebene Fläche aus.

Der Zwischenraum Z wird von den einander gegenüberliegenden, von einem Träger 2 getragenen bzw. in diesen eingehängten Paneelen 3, vom Träger 2 selbst, von den die Anschlüsse 18 aufweisenden Seitenflächen 6 der Paneele 3 den derartigen Seitenflächen gegenüberliegenden Seitenflächen 6 und von der Innenwandung des Abdeckprofils 7 begrenzt.

Die bauseitig vorgesehene Fluidanschlussleitungen 15 werden in Längsrichtung des Zwischenraums Z durch diesen geführt. Die Fluidverbindung zwischen benachbarten bzw. nebeneinander liegenden Paneelen 3 erfolgt mittels einer die benachbart liegenden Anschlüsse 18 verbindenden, U-förmig gestalteten Verbindungsleitung 5, die innerhalb des Zwischenraumes Z gelegen ist.

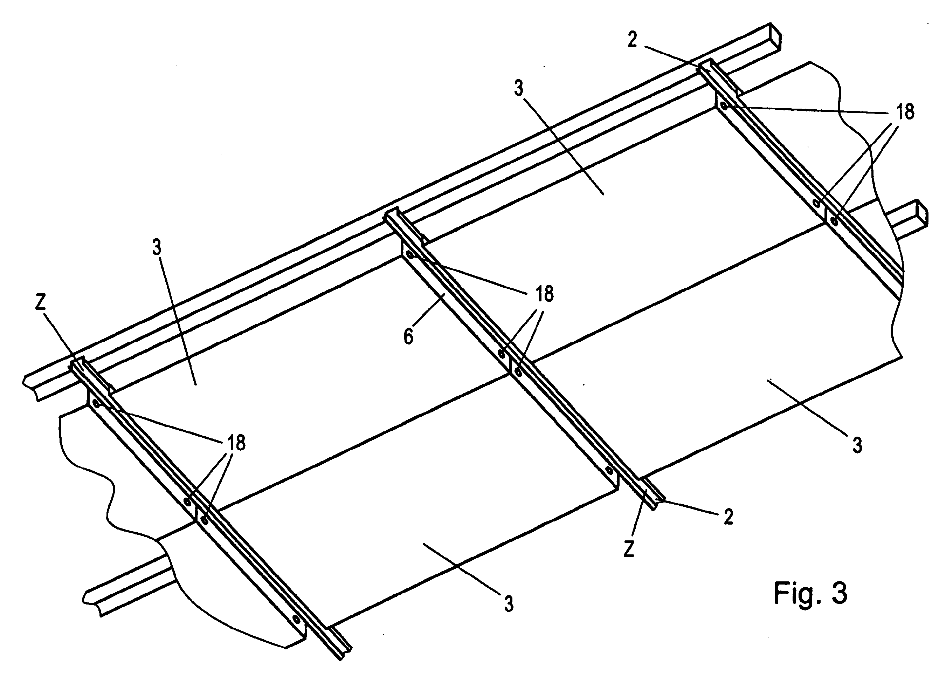

Fig. 3 zeigt eine Ansicht eines teilweise fertiggestellten Deckenaufbaus und man erkennt, dass zwischen zwei parallel angeordneten Trägern 2 die Paneele 3 mit ihrer Längsrichtung im Wesentlichen senkrecht zu den Trägern 2 verlaufend angeordnet sind. Jeweils benachbarte Anschlüsse 18 zweier nebeneinanderliegender Paneele 3 werden, wie in Fig. 4 dargestellt, mit einer U-förmig verlaufenden Verbindungsleitung 5 verbunden, um so den Fluiddurchfluss durch die nebeneinanderliegenden Paneele 3 sicherzustellen. Vorteilhaft wird an den jeweils äußersten Anschlüssen 18 einer in einer Reihe nebeneinander liegend angeordneten Paneelen 3 die bauseitige Fluidzuleitung zu dieser Reihe bzw. die Fluidableitung aus dieser Reihe von Paneelen 3 angeschlossen.

Der Zwischenraum Z kann auch zur Aufnahme derartiger bauseitiger Fluidleitungen vorgesehen sein bzw. kann auch elektrische Leitungen aufnehmen und je nach Vorhandensein von Platz auch für die Aufnahme anderer Leitungen dienen.

Die Querschnittsfläche des Zwischenraumes Z wird von der Breite und der Höhe des Trägers 2 sowie von der Höhe der Seitenflächen 6 bestimmt und ist somit wählbar.

Die Träger 2 können direkt an der Decke 1 oder an an der Decke 1 befestigten Trägern 19 montiert werden, wie aus Fig. 3 ersichtlich ist.

In Fig. 3 und 4 sind die Seitenwandflächen 6' der einzelnen Paneele 3 zu erkennen, mit denen die einzelnen Paneele 3 aneinander stoßen bzw. aneinander anliegen, wenn diese zwischen zwei Trägern 2 nebeneinanderliegend abgehängt werden.

In Fig. 2 ist die Möglichkeit der Anordnung einer Beleuchtungseinheit B, insbesondere in Kombination mit der Abdeckung 7, strichliert dargestellt.

Es ist möglich, Paneele 3 in unterschiedlichen Größen bzw. Formen vorzusehen, z.B. Paneele bei denen die Seitenlänge der die Anschlüsse 18 tragenden Seitenflächen 6 in unterschiedlichen Verhältnissen zur Länge der dazu senkrecht verlaufenden Seitenflächen 6' steht.

Des weiteren ist vorgesehen, dass die Höhe der Seitenflächen 6 bzw. 6' bei sämtlichen Paneelen 3 unabhängig ihrer sonstigen Abmessungen gleich ausgebildet sind und dass die Träger 2 untereinander gleiche Höhe besitzen, sodass bei von den Trägern abgehängten Paneelen 3 eine ebene Fläche ausgebildet wird, sofern die Träger 2 mit ihrer Basis in derselben Montageebene angeordnet sind.

In Fig. 6 ist ein schematischer Schnitt durch ein Paneel 3 dargestellt. Dieses Paneel 3 ist an der Innenwandfläche der Grundfläche 19 mit Halteelementen bzw. Trägern 30 versehen, in die entsprechende Schrauben, Bolzen od. dgl. eingesetzt werden können, um die Grundfläche 19 des Paneels 3 verkleidende Elemente 32 befestigen zu können. Diese Elemente 32 können Gipskartonplatten und/oder Schalldämmplatten und/oder Tapeten sein. Tapeten können allerdings auch auf die Grundfläche 19 durch Kaschieren aufgebracht werden.

Des weiteren kann vorgesehen sein, dass an der Außenwandfläche der gegebenenfalls Perforierungen bzw. Ausnehmungen aufweisenden Grundfläche 19 eine Lage aus mineralischem Vlies 33 oder Glasfasern befestigt, insbesondere angeklebt, ist. Insbesondere Tapeten können auf diese Lage von Vlies aufkaschiert sein. Das Vlies ist derart locker angeordnet, dass z.B. auch ein Sprühlackieren des Vlieses 33 möglich ist, derart, dass durch den aufgesprühten Lack das Vlies 33 mit der Außenwandfläche der Grundfläche 19 verklebt bzw. an dieser Außenfläche befestigt wird.

Des weiteren kann vorgesehen sein, dass die Grundfläche 19 des Paneels 3 mit einer vorgegebenen Anzahl von Ausnehmungen 31 versehen ist, welche allenfalls den Durchtritt von Wärme und/oder Kälte zulassen bzw. auch zu Schallschutzzwecken ausgebildet werden, um dann insbesondere mit dem Vlies 33 zusammenwirken. Die Größe derartiger Ausnehmungen kann zwischen 2 bis 150 mm² betragen. Etwa 10 bis 40% der Fläche der Grundfläche 19 können von derartigen Ausnehmungen 31 eingenommen sein.

Die Dicke der Lage aus Vlies 33 beträgt etwa 2 bis 20 mm. Nach außen hin kann das Vlies 33 auch von einem Verkleidungselement 32 abgedeckt sein.

Aus Fig. 2 ist ersichtlich, dass die Verbindungsleitungen der Anschlüsse 18 im Bereich unterhalb des Trägres 2 zu liegen kommen; es ist aber auch möglich, diese Leitungen im Innenraum des Trägers 2 anzuordnen.

Die Arbeitsfluidleitungen 15 und/oder weitere Leitungen können unterhalb des Trägers 2 oder in dem von ihm begrenzten Innenraum geführt sein.

## Patentansprüche

1. Deckenaufbau bzw. Deckenwärmertauscheranordnung mit Heiz-Kühlpaneelen (3),
- wobei der Deckenaufbau bzw. die Deckenwärmertauscheranordnung zumindest zwei Träger (2) umfasst, die an der zu bestückenden Decke befestigbar sind, von denen die Paneele (3) nebeneinander liegend abgehängt sind, **dadurch gekennzeichnet,**
- **dass** die Fluidanschlüsse (18) der einzelnen Paneele (3) auf ein und derselben Seitenfläche (6) der jeweiligen Paneele (3) ausgebildet sind,
- **dass** die Paneele (3) mit dieser Seitenfläche (6) einem der sie abstützenden Träger (2) zugewandt angeordnet sind,
- **dass** die Paneele (3) mit ihrer die Anschlüsse (18) aufweisenden Seitenfläche (6) einen Zwischenraum (Z) unterhalb des Trägers (2), von dem sie abgehängt sind, begrenzen, und die Anschlüsse (18) in diesen Zwischenraum (Z) einmünden und
- **dass** die Verbindung der Anschlüsse (18) der einzelnen Paneele (3) untereinander und/oder mit bauseits vorgegebenen Fluidanschlüssen von Arbeitsfluidleitungen (15) in diesem unterhalb, vorzugsweise innerhalb, des jeweiligen Trägers (2) gelegenen Zwischenraum (Z) ausgeführt ist.

2. Deckenaufbau bzw. Wärmetauscheranordnung nach Anspruch 1, **dadurch gekennzeichnet, dass** alle zwischen zwei Trägern (2) angeordneten Paneele (3) mit ihrer die Anschlüsse (18) aufweisenden Seitenfläche (6) demselben Träger (2) zugewandt angeordnet sind und/oder dass die, vorzugsweise einstückigen, Träger (2) im Querschnitt U-Form besitzen und mit der Basis des U zur Decke (1) weisend angeordnet bzw. befestigt sind.

3. Deckenaufbau bzw. Wärmetauscheranordnung nach Anspruch 1 oder 2, **dadurch gekennzeichnet, dass** die Paneele (3) von einer vorzugsweise rechteckigen Grundfläche (19), insbesondere im Winkel von 90°, abgebogene, insbesondere abgekantete, Seitenflächen (6) besitzen und in dem von den abgebogenen Seitenflächen (6) begrenzten Innenraum ein die beiden Anschlüsse (18) verbindendes Fluidrohr (4) zur Führung des Arbeitsfluids innerhalb des Paneels (3), insbesondere in Windungen, verläuft und/oder dass die beiden Anschlüsse (18) eines Paneels (3) dieselben Abstände zu den jeweiligen Rändern bzw. Kanten der die Anschlüsse (18) aufweisenden Seitenfläche (6) besitzen und/ oder dass die Anschlüsse (18) aller Paneele (3) auf der jeweiligen die Anschlüsse (18) aufweisenden Seitenfläche (6) gleiche Lage einnehmen und/oder dass das Fluidrohr (4) mit der Innenwandfläche der Grundfläche (19) der Paneele (3) verbunden ist oder an dieser anliegt bzw. an diese angepresst ist, vorzugsweise mit an der Innenwandfläche befestigten, insbesondere angeklebten, Halteelementen (17).

4. Deckenaufbau bzw. Wärmetauscheranordnung nach einem der Ansprüche 1 bis 3, **dadurch gekennzeichnet, dass** die Träger (2) zumindest abschnittsweise, insbesondere an ihren Schenkelenden, Verbindungselemente (9), z.B. seitlich in Richtung auf die Basisebene der U-Form geneigt abgehende Abbiegungen bzw. Einhängevorsprünge, aufweisen, und dass jedes Paneel (3) an die Verbindungselemente (9) der Träger (2) angepasste Verbindungselemente (8) aufweist, z.B. an der die Anschlüsse (18) tragenden Seitenfläche (6) und an den dieser Seitenfläche (6) gegenüberliegenden Seitenfläche (6) an die Einhängevorsprünge bzw. Abbiegungen angepasste Einhängenasen bzw. Abbiegungen und/oder dass der Zwischenraum (Z) mit einem am Träger (2) oder an den Paneelen (3) befestigten Abdeckprofil (7) abgedeckt ist, wobei gegebenenfalls das Abdeckprofil (7) einen U-förmigen Querschnitt besitzt und die Schenkel des U dem Träger (2) zugewendet sind.

5. Deckenaufbau bzw. Wärmetauscheranordnung nach einem der Ansprüche 1 bis 4, **dadurch gekennzeichnet, dass** die einzelnen Paneele (3) an ihrer die Anschlüsse (18) aufweisenden Seitenfläche (6), insbesondere auch an der dieser Seitenfläche (6) gegenüberliegenden Seitenfläche (6), mit Halteeinrichtungen (13), insbesondere Ausnehmungen bzw. Schlitzen versehen sind zur Befestigung eines den Zwischenraum (Z) zwischen bezüglich des Trägers (2) gegenüberliegend angeordneten Paneelen (3) überbrückenden Abdeckprofils (7) bzw. von an diesem ausgebildeten, an die Halteeinrichtungen (13) angepassten Halteelementen (11), insbesondere Vorsprüngen oder Einhänge- bzw. Rastnasen.

6. Deckenaufbau bzw. Wärmetauscheranordnung nach Anspruch 5, **dadurch gekennzeichnet, dass** die Vorsprünge bzw. Einhänge- oder Rastnasen an den Abdeckprofilen (7) an den Enden der Schenkel (10) des U-Profils ausgebildet sind und nach außen in Richtung der Basisebene des U-förmigen Abdeckprofils (7) von den Schenkelenden abgehen.

7. Deckenaufbau bzw. Wärmetauscheranordnung nach einem der Ansprüche 1 bis 6, **dadurch gekennzeichnet, dass** die Paneele (3) eine rechteckförmige Grundfläche (19) besitzen, und mit ihrer kürzeren Seite an dem jeweiligen Träger (2) befestigt bzw. eingehängt sind und/oder dass die Grundfläche (19) der Paneele (3) und die Basis des U-förmigen Abdeckprofils (7) in derselben Ebene liegen bzw. eine im wesentlichen ebene Fläche ausbilden.

8. Deckenaufbau bzw. Wärmetauscheranordnung nach einem der Ansprüche 1 bis 7 mit Anspruch 3, **dadurch gekennzeichnet, dass** die Fluidrohre (4) mit Wärmeisolationsmaterial abgedeckt sind bzw. im Innenraum eines Paneels (3) oberhalb des Fluidrohres (4) eine Wärmedämmschicht angeordnet ist.

9. Deckenaufbau bzw. Wärmetauscheranordnung nach einem der Ansprüche 1 bis 8, **dadurch gekennzeichnet, dass** die Anschlüsse (18) der Paneele (3) für das Arbeitsfluid in den Zwischenraum (Z) senkrecht von den Seitenwandflächen (6) der Paneele (3) abgehen bzw. abstehen.

10. Deckenaufbau bzw. Wärmetauscheranordnung nach einem der Ansprüche 1 bis 9 mit Anspruch 4 oder 5, **dadurch gekennzeichnet, dass** vom Abdeckprofil (7) eine Beleuchtungseinheit getragen ist oder dass im Abdeckprofil (7) eine Ausnehmung ausgebildet ist, von der eine Beleuchtungseinheit aufgenommen ist oder dass von den gegenüberliegenden Paneelen (3) eine den Zwischenraum (Z) überbrückende bzw. abdeckende Beleuchtungseinheit getragen ist, und dass vorteilhafterweise die Lichtaustrittsfläche bzw. die Leuchtfläche der Beleuchtungseinheit in derselben Ebene wie die Grundfläche (16) der Paneele (3) liegt.

11. Deckenaufbau bzw. Wärmetauscheranordnung nach einem der Ansprüche 1 bis 10, **dadurch gekennzeichnet, dass** die in den Trägern (2) nebeneinanderliegend angeordneten Paneele (3), mit ihren sich zwischen zwei beabstandeten Trägern (2) erstreckenden, abgebogenen Seitenwandflächen (6') aneinander anliegend angeordnet sind und/oder dass der Zwischenraum (Z) zwischen einander gegenüberliegenden, von einem Träger (2) getragenen bzw. in diesen eingehängten Paneelen (3) vom Träger (2), von Anschlüsse (18) aufweisenden Seitenflächen (6) und von den diesen Seitenflächen (6) gegenüberliegenden Seitenflächen (6) und von der Innenwandfläche des Abdeckprofils (7) begrenzt ist.

12. Deckenaufbau bzw. Wärmetauscheranordnung nach einem der Ansprüche 1 bis 11, **dadurch gekennzeichnet, dass** vom Zwischenraum (Z) bauseitig vorgesehene Fluidanschlussleitungen (15) aufgenommen sind und/oder dass die Fluidverbindung zwischen benachbarten bzw. nebeneinander liegenden Paneelen (3) mittels einer die benachbart liegenden Anschlüsse (18) benachbarter Paneele (3) verbindenden, insbesondere U-förmig gestalteten Verbindungsleitung (5) erfolgt, die innerhalb des Zwischenraumes (Z) gelegen ist und/oder dass das an der Innenwandfläche der Grundfläche (19) Aufnahmen bzw. Träger für Haltemittel, insbesondere Schrauben und/oder Bolzen, angeordnet sind zur Halterung von die Außenwandfläche der Grundfläche (19) verkleidenden, insbesondere plattenförmigen, Elementen (32), z.B. Gipskartonplatten und/oder Schalldämmplatten.

13. Deckenaufbau bzw. Wärmetauscheranordnung nach einem der Ansprüche 1 bis 12 mit einem der Ansprüche 3, 7 oder 12, **dadurch gekennzeichnet, dass** an der Außenwandfläche der gegebenenfalls Perforierungen bzw. Ausnehmungen aufweisenden Grundfläche (19) eine Lage aus mineralischem Vlies (33) oder Glasfasern befestigt, insbesondere angeklebt ist, wobei gegebenenfalls die Lage aus Vlies zwischen der Außenwandfläche der Grundfläche (19) und einem die Grundfläche (19) verkleidenden Element (32) angeordnet ist.

## Claims

1. A ceiling construction or a heat exchanging ceiling arrangement having heating/cooling panels (3), the ceiling construction or heat exchanging ceiling arrangement comprising at least two beams (2) which may be mounted to the ceiling which is to be provided with said construction, the panels (3) suspended from said beams (2) adjacent to one another,
**characterized**
- **in that** the fluid supplies (18) of the individual panels (3) are formed at the same lateral surface (6) of the respective panels (3),
- **in that** this lateral surface (6) of the panels (3) is facing one of the beams (2) supporting it,
- **in that** the lateral surface (6) of the panels (3), on which the supplies (18) are disposed, borders a space (Z) below the beam (2) from which said panels (3) are suspended, and in that said supplies (18) lead into said space (Z), and
- **in that** the supplies (18) of the individual panels (3) are connected to one another and/or to fluid supplies of working fluid pipes (15), which are provided on site, within said space (Z) below, preferably within, the respective beam (2).

2. The ceiling construction or a heat exchanging ceiling arrangement according to claim 1, **characterized in that** the lateral surfaces (6) with the supplies (18) of all the panels (3) disposed between two beams (2) are facing the same beam (2) and/or in that the, preferably integrally formed, beam (2) have a U-shaped cross-section and are disposed and mounted in a way that base of the U is closer to the ceiling (1).

3. The ceiling construction or a heat exchanging ceiling arrangement according to claim 1 or claim 2, **characterized in that** the panels (3) have lateral surfaces (6) which are bent, particularly edged, from a preferably rectangular base (19), especially at an angle of 90°, and **in that** a fluid pipe (4), which connects the two supplies (18), for guiding the working fluid within the panel (3) is disposed, especially in turns, in the interior space bordered by the bent lateral surfaces (6), and/or **in that** the two supplies (18) of one panel (3) are disposed at the same distance from the respective borders or edges of the lateral surface (6) at which said supplies (18) are disposed and/or **in that** the supplies (18) of all panels (3) are disposed at the same position on the respective lateral surface (6) on which said supplies (18) are disposed and/or **in that** the fluid pipe (4) is connected to or contacting or pressed onto the interior wall surface of the base (19) of the panels (3), preferably by holding members (17) which are mounted, especially adhered, to the interior wall surface.

4. The ceiling construction or a heat exchanging ceiling arrangement according to any one of the claims 1 to 3, **characterized in that** the beams (2) have connecting members (9), such as lateral bend-offs or suspension projections, inclined towards the base of the U-shape, at least at some sections, especially at the ends of their legs, and **in that** each panel (3) has connecting members (8) adapted to the connecting members (9) of the beams (2), for example at the lateral surface (6) at which the supplies (18) are disposed, and has suspension noses or bend-offs adapted to said suspension projections or bend-offs at the lateral surface (6) opposite to said lateral surface (6), and/or **in that** the space (Z) is covered by a cover profile (7) mounted to one of the beams (2) or to the panels (3), the cover profile (7) optionally having a U-shaped cross-section and the legs of the U facing the beam (2).

5. The ceiling construction or a heat exchanging ceiling arrangement according to any one of the claims 1 to 4, **characterized in that**, at their lateral surfaces (6) with the supplies (18), especially also at the lateral surfaces (6) opposite said lateral surfaces (6), the individual panels (3) are provided with holding devices (13), especially with recesses or slits, for mounting a cover profile (7) spanning the space (7) between panels (3) disposed opposite each other in respect of the beams (2) or for mounting holding members (11), especially projections or suspension or engaging noses, formed at said cover profile (7) and adapted to the holding devices (13).

6. The ceiling construction or a heat exchanging ceiling arrangement according to claim 5, **characterized in that** the projections or suspension or engaging noses at the cover profiles (7) are formed at the ends of the legs (10) of the U-shaped profile and project outwards from the legs' ends towards the base level of the U-shaped cover profile (7).

7. The ceiling construction or a heat exchanging ceiling arrangement according to any one of the claims 1 to 6, **characterized in that** the panels (3) have a rectangular base (19) and their shorter sides are fastened to or suspended from the respective beam (2) and/or **in that** the base (19) of the panels (3) and the base of the U-shaped cover profile (7) lie within the same plane or form an essentially plane surface.

8. The ceiling construction or a heat exchanging ceiling arrangement according to any one of the claims 1 to 7 in combination with claim 3, **characterized in that** the fluid pipes (4) are covered with heat insulating material or **in that** a heat insulating layer is disposed in the interior of a panel (3) above the fluid pipe (4).

9. The ceiling construction or a heat exchanging ceiling arrangement according to any one of the claims 1 to 8, **characterized in that** the supplies (18) for the working fluid of the panels (3) project vertically from the lateral wall surfaces (6) of the panels (3) into the space (Z).

10. The ceiling construction or a heat exchanging ceiling arrangement according to any one of the claims 1 to 9 in combination with claim 4 or claim 5, **characterized in that** the cover profile (7) supports a lighting unit or **in that** a recess, which receives a lighting unit, is formed in the cover profile (7) or **in that** two opposite panels (3) support a lighting unit which spans or covers the space (Z), and **in that** the light emitting surface or the luminous surface of the lighting unit advantageously lies within the same plane as the base (16) of the panels (3).

11. The ceiling construction or a heat exchanging ceiling arrangement according to any one of the claims 1 to 10, **characterized in that** the panels (3), which are disposed adjacent to one another on the beams (2), are disposed in a way that their bent lateral wall surfaces (6') extending between two spaced-apart beams (2) contact each other and/or **in that** the space (Z) between opposite panels (3) supported by or suspended from a beam (2) is bordered by lateral surfaces (6) with supplies (18) and by the lateral surfaces (6) opposite said lateral surfaces (6) as well as by the interior wall surface of the cover profile (7).

12. The ceiling construction or a heat exchanging ceiling arrangement according to any one of the claims 1 to 11, **characterized in that** the space (Z) receives fluid supply conduits (15) provided on-site and/or **in that** the fluid connection between adjacent panels (3) is established by means of a connecting conduit (5) which connects the adjacent supplies (18) of adjacent panels (3) and is especially U-shaped, said connecting conduit (5) being disposed within the space (Z), and/or **in that** recesses or supports for holding means, especially screws and/or bolts, being disposed at the interior wall surface of the base (19), for holding members (32), which cover the outer wall surface of the base (19) and are especially panel-shaped, such as gypsum plaster boards and/or sound insulating boards.

13. The ceiling construction or a heat exchanging ceiling arrangement according to any one of the claims 1 to 12, including one of the claims 3, 7 or 12, **characterized in that** a layer of mineral fiber wool (33) or glass fibers is mounted, especially adhered, to the outer wall surface of the base (19) which optionally has perforations or recesses, said layer of mineral fiber wool being optionally disposed between the outer wall surface of the base (19) and a member (32) covering the base (19).

## Revendications

1. Construction de plafond ou échangeur thermique de plafond avec des panneaux (3) de chauffage et de réfrigération, ladite construction de plafond ou ledit échangeur thermique de plafond comprenant au moins deux poutres (2) qui peuvent être fixées au plafond à équiper, les panneaux (3) étant suspendus, l'un à côté de l'autre, desdites poutres (2),
**caractérisé**/e en ce
- que les branchements de fluide (18) des panneaux (3) individuels sont formés sur la même surface latérale (6) du panneau (3) respectif,
- que les panneaux (3) sont aménagés de façon que lesdites surfaces latérales (6) soient orientées vers la poutre (2) qui supporte lesdits panneaux (3),
- que les panneaux (3) sont aménagés de façon que leurs surfaces latérales (6), qui comprennent les branchements (1B), limitent un espace (Z) sous les poutres (2) desquelles ils sont suspendus, et que les branchements (18) débouchent dans ledit espace (Z), et
- que les branchements (18) des panneaux (3) individuels sont reliés l'un avec l'autre et/ou avec des branchements de fluide de conduites de fluide de travail (15) qui sont déjà montés sur site dans ledit espace (Z) sous, de préférence à l'intérieur de, la poutre (2) respective.

2. Construction de plafond ou échangeur thermique de plafond selon la revendication 1, **caractérisé**/e en ce que tous les panneaux (3) sont aménagés entre deux poutres (2) de façon que leurs surfaces latérales (6) avec les branchements (18) sont orientées vers la même poutre (2) et/ou que les poutres (2), qui sont, de préférence, faites en une seule pièce, ont une section transversale en U, la base de l'U étant orientée vers le plafond (1).

3. Construction de plafond ou échangeur thermique de plafond selon la revendication 1 ou 2. **caractérisé**/e en ce que les panneaux (3) ont des surfaces latérales (6) qui sont pliées, notamment bordées à vive arête, d'une surface (19) qui est de préférence rectangulaire, de préférence à un angle de 90°, et qu'un tube (4) de fluide reliant les deux branchements (18) pour transporter le fluide de travail à l'intérieur du panneau (3) est disposé, notamment en spires, dans l'espace intérieur limité par les surfaces latérales (6) pliées, et/ou que les deux branchements (18) d'un panneau (3) sont écartés d'une même distance des bords respectifs ou arêtes respectives de la surface latérale (6) comprenant lesdits branchements (18) et/ou que les branchements (18) des tous les panneaux (18) sont disposés dans la même position sur la surface latérale (6) respective, qui comprend les branchements (18), et/ou que le tube de fluide (4) est relié à la surface du mur intérieur de la surface (19) des panneaux (3) ou est adjacent ou pressé contre à ladite surface du mur intérieur, de préférence par des éléments de serrage (17) qui sont attachés, notamment collés, à la surface du mur intérieur.

4. Construction de plafond ou échangeur thermique de plafond selon l'une des revendications 1 à 3, **caractérisé**/e en ce que les poutres (2) ont des éléments de fixation (9), au moins à certaines sections, notamment aux bouts de leurs branches, par exemple des pliages ou des épaulements de suspension s'étendant latéralement et de manière inclinée vers la base de l'U, et que chaque panneau (3) a des éléments de fixation (8) adaptés aux éléments de fixation (9) des poutres (2), par exemple, sur la surface latérale (6) avec les branchements (18) et sur la surface latérale (6) opposée à ladite surface latérale (6), en forme des talons de suspension ou des pliages adaptés aux épaulements de suspension ou aux pliages, et/ou que l'espace (Z) est couvert par un profil de recouvrement (7) attaché à la poutre (2) ou aux panneaux (3), ledit profil de recouvrement (7) ayant éventuellement une section transversale en U, les branches de l'U étant orientés vers la poutre (2).

5. Construction de plafond ou échangeur thermique de plafond selon l'une des revendications 1 à 3, **caractérisé**/e en ce que les panneaux (3) individuels sont pourvus de dispositifs de retenue (13), notamment de creux ou de rainures, sur leur surface latérale (6) avec les branchements (18), pour y attacher un profil de recouvrement (7) pour recouvrir l'espace (Z) entre des panneaux (3) opposés l'un à l'autre par rapport à la poutre (2) ou des éléments de fixation (11) adaptés aux dispositifs de retenue (13) formés sur le profil de recouvrement (7), notamment des épaulements ou des talons de suspension ou d'arrêt.

6. Construction de plafond ou échangeur thermique de plafond selon la revendication 5. **caractérisé**/e en ce que les épaulements ou les talons de suspension ou d'arrêt sont formés aux bouts des branches (10) du profil en U des profils de recouvrement (7) et s'étendent des bouts des branches vers l'extérieur vers la base du profil de recouvrement (7) en U.

7. Construction de plafond ou échangeur thermique de plafond selon l'une des revendications 1 à 6, **caractérisé**/e en ce que les panneaux (3) ont une surface rectangulaire, leurs côtés plus courts étant attachés au ou suspendus de la poutre (2) respectif et/ou que la surface (19) des panneaux (3) et la base du profil de recouvrement (7) en U se trouvent dans le même plan ou forment une surface sensiblement plane.

8. Construction de plafond ou échangeur thermique de plafond selon l'une des revendications 1 à 7, en combinaison avec la revendication 3, caracterisé/e en ce que les tubes de fluide (4) sont recouverts d'une matière thermo-isolante ou qu'une couche thermo-isolante est disposée à l'intérieur d'un panneau (3) au-dessus du tube de fluide (4).

9. Construction de plafond ou échangeur thermique de plafond selon l'une des revendications 1 à 8, **caractérisé**/e en ce que les branchements (18) des panneaux (3) pour le fluide de travail s'étendent ou avancent de manière verticale des surfaces latérales (6) des panneaux (3) dans l'espace (Z).

10. Construction de plafond ou échangeur thermique de plafond selon l'une des revendications 1 à 9, en combinaison avec la revendication 4 ou 5, **caractérisé**/e en ce que le profil de recouvrement (7) soutient un moyen d'éclairage ou que un creux est formé dans le profil de recouvrement (7), ledit creux accueillant une unité d'éclairage, ou que les panneaux (3) opposés soutiennent une unité d'éclairage recouvrant l'espace (Z), et que la surface de radiation de lumière ou la surface lumineuse de l'unité d'éclairage se trouve avantageusement dans le même plan que la surface (16) des panneaux (3).

11. Construction de plafond ou échangeur thermique de plafond selon l'une des revendications 1 à 10, **caractérisé**/e en ce que les panneaux (3) aménagés l'un à côté de l'autre sur les poutres (2) sont disposées de façon que leurs surfaces latérales (6') pliées s'étendant entre deux poutres (2) écartées sont adjacentes et/ou que l'espace (Z) entre des panneaux (3) opposés, soutenus par une poutre (2) ou suspendus de celui-ci, est limité par la poutre (2), par des surfaces latérales (6) avec des branchements (18), par des surfaces latérales (6) opposées auxdites surfaces latérales (6) et par la surface du mur intérieur du profil de recouvrement (7).

12. Construction de plafond ou échangeur thermique de plafond selon l'une des revendications 1 à 11, **caractérisé**/e en ce que l'espace (Z) accueille des conduites de branchement de fluide (15) disposées sur site et/ou que le raccord de fluide entre des panneaux (3) adjacents est assuré par une conduite de raccord (5), notamment en U, reliant les branchements (18) adjacents des panneaux (3) adjacents, ladite conduite de raccord (5) étant disposée à l'intérieur de l'espace (Z), et/ou que des logements ou des supports pour des moyens de fixation, notamment des vis et des boulons, sont disposés sur la surface du mur intérieur de la surface (19), pour fixer des éléments (32), notamment en forme de plaques, qui recouvrent la surface du mur extérieure de la surface (19), par exemple des plaques de parement en plâtre et/ou des plaques d'isolation acoustique.

13. Construction de plafond ou échangeur thermique de plafond selon l'une des revendications 1 à 12, incluant l'une des revendications 3, 7 ou 12, **caractérisé**/e en ce qu'une couche de laine minérale (33) ou de fibres de verre est fixée, notamment collée, à la surface du mur extérieur de la surface (19) qui est éventuellement pourvue de perforations ou de creux, la couche de laine étant éventuellement disposée entre la surface du mur extérieur de la surface (19) et un élément (32) recouvrant la surface (19).
